(19) **Europäisches Patentamt**

**European Patent Office**

**Office européen des brevets**

(11) Veröffentlichungsnummer: **0 115 027 B1**

# (12) EUROPÄISCHE PATENTSCHRIFT

(45) Veröffentlichungstag der Patentschrift: **25.09.91**

(21) Anmeldenummer: **83112822.8**

(22) Anmeldetag: **20.12.83**

(51) Int. Cl.5: **G06K 1/12**, G06K 5/02, G06K 7/14

(54) **Verfahren zum Drucken, Auswerten und Überprüfen des Druckbildes eines Druckers und Vorrichtung zum Durchführen dieses Verfahrens.**

(30) Priorität: **04.01.83 DE 3300081**

(43) Veröffentlichungstag der Anmeldung:
**08.08.84 Patentblatt 84/32**

(45) Bekanntmachung des Hinweises auf die
Patenterteilung:
**25.09.91 Patentblatt 91/39**

(84) Benannte Vertragsstaaten:
**AT BE CH DE FR GB IT LI LU NL SE**

(56) Entgegenhaltungen:

| | |
|---|---|
| EP-A- 0 000 657 | EP-A- 0 050 198 |
| EP-A- 0 053 895 | DE-A- 2 036 218 |
| DE-A- 2 451 289 | DE-A- 2 816 161 |
| DE-A- 3 149 879 | DE-B- 2 905 008 |
| FR-A- 2 475 496 | US-A- 3 577 137 |
| US-A- 3 729 618 | US-A- 3 739 719 |
| US-A- 3 806 715 | US-A- 3 857 020 |

**Elektronische Rechenanlagen, B7922 FX 18.
Jahrgang 1976 Heft 6. p. 280-286**

(73) Patentinhaber: **F & O Electronic Systems
GmbH
Kirchenstrasse 38
W-6901 Neckarsteinach(DE)**

(72) Erfinder: **Obstfelder, Günther
Panoramastrasse 28
W-6940 Weinheim-Lützelsachsen(DE)**
Erfinder: **Kreutze, Gerhard
Kirchenstrasse 38
W-6901 Neckarsteinach(DE)**
Erfinder: **Lüttig, Winfried
Lange Acker 16
W-6901 Heiligkreuzsteinach(DE)**

(74) Vertreter: **Mierswa, Klaus, Dipl.-Ing.
Friedrichstrasse 171
W-6800 Mannheim 24(DE)**

**Beschreibung**

Die Erfindung betrifft Verfahren zum Drucken und Prüfen eines Druckbildes aus Strichcodes oder aus Zahlen mittels eines elektrisch angesteuerten Thermodruckers mit einer Thermodruckplatine; des weiteren betrifft die Erfindung Vorrichtungen zur Durchführung der Verfahren.

Die EP-A1-0 000 657 beinhaltet einen Thermodrucker mit einer elektrisch ansteuerbaren Thermodruckplatine, der insbesondere zum Drucken eines Strichcodes auf einer Etikette benützt werden kann, einem Schrittmotor zum Transport einer Papierbahn durch den Drucker, wobei die zu druckenden Daten von Hand über eine Tastatur oder direkt über einen Eingang in einen Speicher eines Rechners eingebbar sind und einem stehenden optoelektronischen Sensor, der vor der Thermodruckplatine angeordnet ist. Auf der Papierbahn sind Passermarken für die Positionierung des Druckbildes vorhanden, die der Sensor während des Transports der Papierbahn erfaßt und damit das Drucken der Etiketten auf der Papierbahn steuert. Dieser Thermodrucker ist als integriertes Handetikettiergerät ausgebildet, welches einen Programm- und Datenträger (RAM, ROM), der fest programmiert werden kann, ein Tastenfeld zur variablen Dateneingabe und eine Datenanzeige aufweist. Die Thermodruckplatine umfaßt eine Platte mit einer Mehrzahl von durch den Rechner gesteuerten heizbaren Elementen, die das Bild zeilenweise und zeichenweise drucken. Da der Sensor vor der Thermodruckplatine angeordnet ist, ist die Vorrichtung zum Lesen eines gedruckten Bildes nicht geeignet.

Aus der US-A-3 806 715 ist bekannt, eine magnetisch codierte Information auf ein Etikett aufzudrucken und auf Richtigkeit zu prüfen, wobei die Information auf dem Etikett durch einen Sensor gelesen und mit einer in einem Speicher gespeicherten ursprünglichen Information verglichen wird. Bei Feststellen eines Fehlers wird das Etikett visuell als falsch markiert, womit die falschen Etiketten entwertet werden. Der Gegenstand der US-A-3 806 715 erfüllt wohl die Forderung, daß das Druckbild überprüft und ein Falschdruck angezeigt wird, jedoch arbeitet die Einrichtung mit einer magnetischen Codierung. Die Überprüfung des magnetischen Codes erfolgt in einer vom Druckkopf räumlich getrennten Station.

Durch die DE-OS 3149879 ist ein Verfahren zum Drucken eines Druckbildes aus Strichcodes mittels eines elektrisch angesteuerten Thermodruckers mit einer Thermodruckplatine bekanntgeworden, wobei die Druckzeichen je Zeile des aus einer Mehrzahl von Druckzeilen bestehenden Strichcodes zeilenweise generiert werden und die einzelnen Codebalken des Strichcodes quer auf eine längs transportierte Papierbahn gedruckt werden und der Strichcode eine beliebige Länge aufweist.

Durch die US-A-3 729 618 ist eine mechanische Abtasteinrichtung für Codedruck in Verbindung mit einem Strichcode-Etikettendrucker zum Abtasten des gedruckten Codes auf Richtigkeit desselben bekanntgeworden. Dabei sind die Etiketten auf einem Trägerband waagrecht angeordnet, wobei die Information auf den Etiketten senkrecht aufgezeichnet ist. Der Abtastmechanismus besteht aus einer länglichen Schiene, die parallel zu einer waagrechten Reihe von Etiketten direkt vor denselben angeordnet ist und die eine Mehrzahl von schräg angeordneten, zueinander parallelen Schlitzen aufweist, die voneinander einen äquidistanten Abstand haben. Vor dieser Schiene ist ein Abtastschlitten angeordnet, der einen Kopf aufweist, der in einem vorderen, der Schiene zugewandten Ende einen Schlitz besitzt, der entgegengesetzt der Richtung der Schlitze innerhalb der Schiene angeordnet ist. Des weiteren ist innerhalb des Kopfes eine Lichtquelle angeordnet, die Licht durch die beiden Schlitze auf die Etiketten aussendet. Der Abtastkopf ist längs der Schiene über die Breite der Etiketten verfahrbar, so daß bei Hindurchbewegung des Etikettenträgers durch die Vorrichtung sämtliche Etiketten bei Verfahren des Abtastkopfes abgetastet werden können. Des weiteren besitzt die Vorrichtung elektrische Bausteine zum Vergleich der gelesenen Information des Etiketts mit der ursprünglichen Information, die auf das Etikett aufzudrucken war.

Der bekannten Vorrichtung haftet eine Reihe von Nachteilen an. Der Gegenstand der genannten US-A-3 729 618 erfüllt wohl die Forderung, daß das Druckbild überprüft und ein Falschdruck angezeigt werden kann, jedoch liegen hier sämtliche Etiketten schon in fertig gedruckter Ausführung vor. Es ist deshalb nur noch möglich, die Etiketten nach der Feststellung eines Fehlers vom Trägerband auszusortieren. Des weiteren erfolgt die Überprüfung der Information in einer vom Drucker räumlich getrennten Station; schließlich handelt es sich hier um eine stationäre Station, die nachfolgender Teil eines Druckers ist.

Der Erfindung liegt die Aufgabe zugrunde, Verfahren und Vorrichtungen zu schaffen, bei denen das im Entstehen befindliche Druckbild geprüft und noch während des Druckvorganges, spätestens aber unmittelbar mit Beendigung des Druckvorganges, bei Vorliegen eines Falschdruckes derselbe angezeigt werden soll.

Eine Lösung dieser Aufgabe besteht erfindungsgemäß in den Merkmalen des Patentanspruchs 1, eine weitere Lösung erfindungsgemäß in den Merkmalen des Patentanspruchs 2. Weitere Ausgestaltungen der erfindungsgemäßen Verfahren sind in den Unteransprüchen 3 bis 5 gekennzeichnet. Erfindungsgemäße Vorrichtungen zur Durchführung der Verfahren bestehen in den Merkmalen der Ansprüche 6 und 7; weitere vorteilhafte Ausgestaltungen der Vorrichtungen beinhalten die Unteransprüche 8 bis 12.

Das erfindungsgemäße Verfahren des Anspruchs 1 besitzt den Vorteil, daß mit ihm visuelle Druckbilder, die gegenüber den richtigen Informationen eine falsche Information beinhalten, während des Druckes geprüft und sofort noch während des Druckes als Falschdruck gekennzeichnet und optisch sichtbar entwertet werden können. Damit erfolgt die Prüfung des Druckbildes und die Kennzeichnung eines falschen Druckbildes im Status nascendi.

Das erfindungsgemäße Verfahren des Anspruchs 2 besitzt den Vorteil, daß mit ihm visuelle Druckbilder, die gegenüber den richtigen Informationen eine falsche Information beinhalten, spätestens sofort nach Beendigung des Druckbildes fertig geprüft und sofort nach Beendigung des Druckbildes ebenfalls als Falschdruck gekennzeichnet und optisch sichtbar entwertet werden können.

Die Bedienungsperson, die die Etiketten oder Codes ausdruckt, sieht deshalb sofort, wenn ein Druckbild nicht die richtige Information wiedergibt. Beispielsweise wird in diesem Fall der Rest des Druckbildes geschwärzt. Oder es wird am Ende des Druckbildes und unmittelbar anschließend ein breiter schwarzer Querbalken gedruckt. Ist das erzeugte Druckbild ein Strichcode, so ist der schwarze Querbalken breiter als der breiteste aufgetretene Codebalken.

Das Druckbild kann auch bei anderen Fehlern, als der Wiedergabe von falschen Informationen, als ungültig gekennzeichnet werden. Beispielsweise dann, wenn die Reflexion des einzelnen Zeichens bzw. des Strichcodes unzureichend ist und unter einen vorgegebenen Wert fällt. In diesem Falle wird das Druckbild als nicht verwendbar gekennzeichnet, wenn der Code nicht genügend ausgedruckt oder zu schwach gedruckt ist. In vorteilhafter Weise kann des weiteren das Druckbild als unbrauchbar gekennzeichnet werden, wenn der Übergang zwischen dem gedruckten Zeichen bzw. den gedruckten Strichen und den daneben befindlichen druckfreien Leerstellen nicht genügend scharf ist und unter einen bestimmten Wert gefallen ist. Das Druckbild kann auch dann als unbrauchbar gekennzeichnet werden, wenn die Ränder der Zeichen unscharf oder verwischt sind.

In vorteilhafter Weise können die erfindungsgemäßen Verfahren sowohl bei Handgeräten, als auch bei stationären Geräten eingesetzt werden. Insbesondere ist der Einsatz für Handdruckgeräte vorteilhaft, mit denen die Waren vor Ort ausgezeichnet werden können.

Die erfindungsgemäße Vorrichtung besitzt den Vorteil, daß bei dieser die Überprüfung des gedruckten Druckbildes noch während des Druckes erfolgt. Das ist deshalb möglich, weil die Druckeinrichtung und die Prüfeinrichtung integriert ausgeführt und nicht mehr räumlich voneinander getrennt sind, so daß vorteilhaft eine kleine Bauweise erzielt wird und das Gerät als Handdrucker gebaut werden kann.

Die Miniaturisierung des Gerätes zu einem Handgerät, welches drucken und lesen und einen Falschdruck anzeigen kann, ist nur möglich, weil das Lese-Prüfen der Information schon während des Druckvorgangs erfolgte, wobei die Anzeige eines Falschdruckes entweder noch während des Druckvorganges vor Fertigstellung des Druckbildes oder unmittelbar nach Fertigstellung des Druckbildes erfolgt. Die erste Alternative (Anspruch 1) der Fehleranzeige ist dann gegeben, wenn die Zeichen quer zur Laufrichtung des Papiers, beispielsweise beim Drucken von Strichcodes die einzelnen Codebalken längs zur Laufrichtung des Papiers, gedruckt werden. Die zweite Alternative (Anspruch 2) der Fehleranzeige ist dann gegeben, wenn die einzelnen Zeichen längs zur Laufrichtung des Papiers und somit beim Drucken eines Strichcodes die einzelnen Codebalken quer zur Laufrichtung des Papiers gedruckt werden.

Darüber hinaus kann der Kunde in die erfindungsgemäße Vorrichtung von außen ein kundenspezifisches Steuer- und Rechnerprogramm einsetzen. Daneben besitzt die erfindungsgemäße Vorrichtung neben einer visuellen Anzeige und einer Festprogrammier-Einrichtung eine alpha-numerische Tastatur zur Eingabe beliebiger Daten direkt vor Ort. Mit der Festprogrammier-Einrichtung können beispielsweise verschiedene Währungen eingestellt werden. Daneben ist die erfindungsgemäße Vorrichtung klein, robust und mechanisch unanfällig.

Mit den erfindungsgemäßen Verfahren und Vorrichtungen können somit zum ersten Mal Druckbilder erzeugt werden, die noch während ihrer Entstehung überprüft und bei Vorliegen eines Fehlers sofort noch vor Beendigung des Druckvorganges oder unmittelbar danach als Falschdruck optisch gekennzeichnet werden.

Des weiteren können auf dem Papier befindliche Passermarken vorhanden sein zur Positionierung der aufeinanderfolgenden Druckbilder. Durch diese Passermarken kann in vorteilhafter Weise die Vorschubgeschwindigkeit des das Papier transportierenden Motors und der Druckbeginn für das einzelne Druckbild gesteuert werden.

Beim Prüfen eines längs der Papierbahn gedruckten Strichcodes gemäß dem erfindungsgemäßen Verfahren fährt der Sensor am Anfang, beispielsweise gesteuert durch eine Passermarke auf dem Papier, ein Stück in die Druckzeile hinein und wird dort angehalten. Nunmehr laufen die Druckzeichen fortlaufend mit dem Papiervorschub am Sensor vorbei, der somit mit der Geschwindigkeit der Papierbahn den Strichcode liest und somit die Prüfung des Strichcodes erst nach dessen Fertigstellung abschließen kann. In diesem Fall wird zur Kennzeichnung, daß das Druckbild unbrauchbar ist, unmittelbar anschließend an den Strichcode eine Entwertung gedruckt, beispielsweise ein schwarzer Querbalken, der dicker ist als der dickste verwendete Codestrich.

Beispiele der Erfindung sind in der Zeichnung dargestellt und anschließend beschrieben. Dabei zeigen:

Figur 1    eine Draufsicht auf eine erfindungsgemäße Vorrichtung zur Durchführung der erfindungsgemäßen Verfahren unter Weglassen der Deckplatte und des Antriebsmotors

Figur 2    eine Draufsicht auf die Unterseite von Figur 1

Figur 3    eine Ansicht von hinten auf die Querseite der Trägerplatte

Figur 4    eine Ansicht von vorn auf die Längsseite des Querteils mit Führungsstangen, Schlitten und opto-elektronischem Sensor

Figur 5    das Druckbild auf einem Papierstreifen, welches gemäß des Anspruchs 1 quer zum Papierstreifen gedruckt ist, wobei der obere Teil einen als "richtig", der untere Teil einen als "falsch" abgetasteten Strichcode aufweist, dessen unterer Teil deshalb geschwärzt ist

Figur 6    das Druckbild auf einem Papierstreifen, welches gemäß des Anspruchs 2 längs zum Papierstreifen gedruckt ist, wobei das Druckbild in Längsausdehnung des Papierstreifens beliebig lang sein kann

Figur 7    ein Blockschaltbild mit einem Drucker zum Drucken eines Druckbildes gemäß Figur 6, um die Ansteuerung der Thermodruckplatine zu zeigen

Figur 8    eine Thermodruckplatine mit durchgehendem Resistorbalken und integrierten elektronischen Bausteinen, wie sie in Figur 7 Verwendung finden kann und

Figur 9    eine Ansicht der Vorrichtung, welche hier als Handgerät ausgeführt ist.

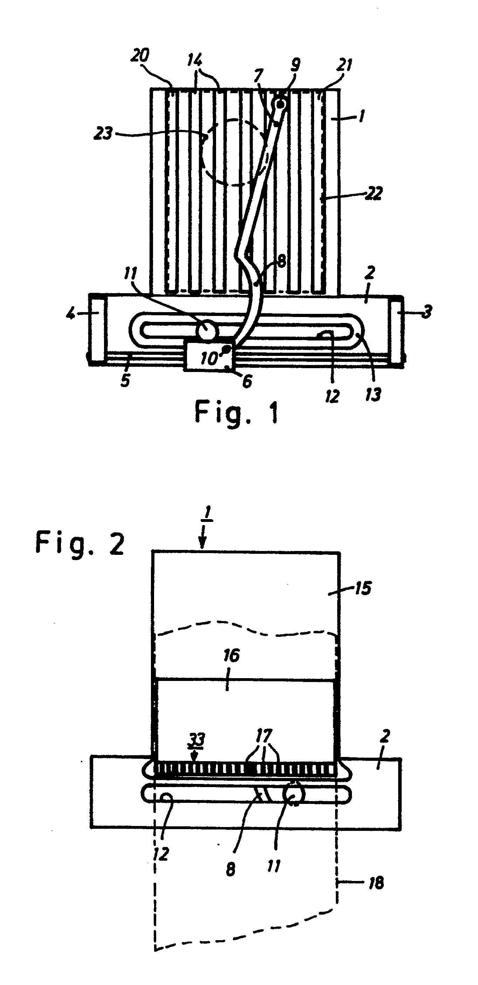

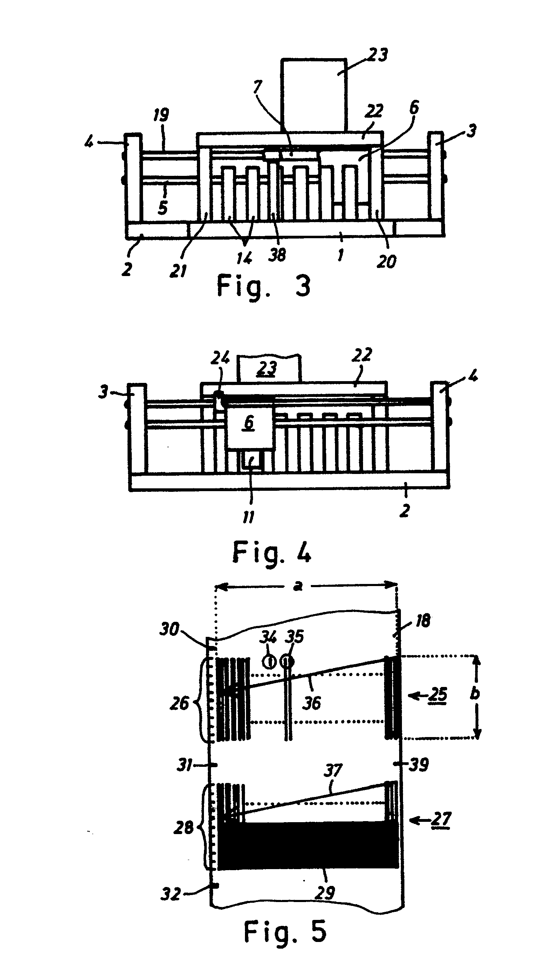

In der folgenden Beschreibung bedeutet Druckzeile oder Zeile jeweils diejenige Zeichengenerierung, die die Typendruckzeile des Druckers erzeugt. Bei Verwendung einer Thermodruckplatine ist das die Resistorzeile derselben. Die erfindungsgemäße Vorrichtung besteht gemäß Figur 1 aus einer Trägerplatte 1, die vorzugsweise flach und länglich ist. An diese Trägerplatte 1 ist ein plattenförmiges Querteil einstückig angeformt, wobei die Trägerplatte und das Querteil den Grundkörper bilden. Das plattenförmige Querteil ist in seiner Längsausdehnung zur Querausdehnung der Trägerplatte angebracht, so daß die Enden des Querteils 2 die Trägerplatte 1 überragen. An den Enden des plattenförmigen Querteils 2 sind zwei Seitenteile 3, 4 montiert, zwischen denen zwei Führungsstangen 5 und 19 (Figur 3) angeordnet sind. Wie aus Figur 3 ersichtlich ist, befinden sich die Führungsstangen in verschiedener Höhe. Auf der äußeren Führungsstange 5 ist ein Schlitten 6 angeordnet, der gleitbar auf der Führungsstange 5 hin- und herbeweglich ist. An dem Schlitten 6 ist ein Führungsarm 7 beweglich angelenkt, wobei dieser Führungsarm 7 ein gebogenes Endteil 8 besitzt, welches mit seinem äußeren Ende gelenkig und verschiebbar im Drehpunkt 10 des Schlittens 6 befestigt ist. Das andere Ende des Hebelarms 7 ist auf der Trägerplatte 1 drehbar um eine Achse 9 gehaltert, die ragt z.B. in eine Lagerbuchse 38 (Figur 3) hineinragt. Beim Schwenken des Hebels 7 um die Achse 9 bewegt sich der Schlitten 6 auf der Führungsstange 5 hin und her.

Im plattenförmigen Querteil 2 ist längs zur Längsachse desselben ein Längsschlitz 12 angeordnet, der beispielsweise von einer umlaufenden Vertiefung 13 umgeben sein kann. Der Schlitten 6 trägt einen opto-elektronischen Sensor, der beispielsweise ein integrierter Infrarotsender und Infrarotempfänger ist. Sämtliche Zuleitungen zu diesem Sensor 11 sind weggelassen.

Die Trägerplatte 1 trägt auf ihrer Oberseite zwei ihren Längsrändern benachbarte Seitenteile 20, 21, die sich bis zum plattenförmigen Querteil erstrecken (Figur 1). Auf diesen Seitenteilen 20, 21 der Trägerplatte 1 ist eine Deckplatte 22 (Figur 3) montiert, auf der wiederum ein Elektro-Motor 23 und ein nicht gezeigtes Zahnradgetriebe oder -vorgelege montiert sind. Die Antriebswelle des Motors 23 steht über das Zahnradgetriebe mit dem Hebelarm 7 in Verbindung, wobei auf den Hebelarm ein (nicht gezeigtes) Antriebszahnrad montiert ist. Wird der Elektromotor 23 in Tätigkeit gesetzt, so wird über das Zahnradgetriebe der Hebelarm 7 geschwenkt, so daß der Schlitten 6 und mit ihm der opto-elektronische Sensor 11 genau über den Schlitz 12 innerhalb des Querteils 2 entlangläuft.

Auf der Unterseite 15 der Trägerplatte 1 ist des weiteren eine Thermodruckplatine 16 montiert, wobei die Druckzeile 33 der Thermodruckplatine 16, also die druckende Resistorzeile, bestehend aus den einzelnen Resistordruckpunkten 17, von der Oberfläche 15 der Trägerplatte 1 abgewandt ist, so wie es in Figur 2 gezeigt ist. Die Resistordruckzeile 33 der Thermodruckplatine 16 ist dabei in unmittelbarer Nachbarschaft des Längsschlitzes 12 angeordnet, wobei der Längsschlitz 12 länger als die Druckzeile 33 ist.

Des weiteren kann die Thermodruckplatine 16 in die Unterseite 15 der Trägerplatte 1 eingelassen sein, so daß die freie Unterseite 15 der Trägerplatte, die Thermodruckplatine 16 und die untere Oberfläche des plattenförmigen Querteils 2 eine Ebene bilden.

Des weiteren besteht die Vorrichtung aus einer nicht gezeigten Transporteinrichtung für eine Papierbahn 18, die über die Unterseite 15 der Trägerplatte 1 und die Thermodruckplatine 16 und somit über die Druckzeile 33 der einzelnen Resistordruckpunkte 17 hinwegläuft. Eine ebenfalls nicht gezeigte Andrückeinrichtung drückt die Papierbahn 18 im Bereich der Druckzeile 33 der Thermodruckplatine 16 an die Druckzeile an. Des weiteren besitzt die Transporteinrichtung zum Transport der Papierbahn 18 durch den Drucker einen Motor, der ebenfalls nicht gezeigt ist. Aufgrund der beschriebenen Teile wird somit die Papierbahn 18 beim Drucken dergestalt bedruckt, daß das Druckbild auf der Papierbahn 18 auf der der unteren Oberfläche des Querteils 2 zugewandten Seite der Papierbahn 18 aufgedruckt ist, so daß das Druckbild bei Draufsicht auf Figur 1 innerhalb des Längsschlitzes 12 sichtbar erscheint.

Dieses Druckbild kann mittels des opto-elektronischen Sensors 11 innerhalb des Längsschlitzes 12 gelesen werden, wenn der Schlitten 6 mitsamt dem Sensor 11 längs des Schlitzes 12 bewegt wird. Zur Verbesserung der Führung kann zusätzlich die zweite Führungsstange 19 verwendet werden, wobei am Schlitten 6 dazu ein Hebelarm 24 angeordnet ist, der die Führungsstange 19 umgreift. Dadurch kann der Schlitten 6 längs der Führungsstange 5 mit hoher Geschwindigkeit verfahren werden.

Des weiteren kann die Trägerplatte 1 auf der Oberseite gemäß den Figuren 1, 3 und 4 Kühlrippen 14 aufweisen, die zur Wärmeabfuhr der beim Drucken erzeugten Wärme dienen. Diese Kühlrippen 14 sind längs der Seitenteile 20, 21 der Trägerplatte 1 angeordnet, wobei der Hebelarm 7 zwischen der Deckplatte 22 und dem oberen Ende der Kühlrippen 14 frei beweglich sich befindet. Damit ist auch ein mechanischer Schutz des Hebelarms innerhalb des Gehäuses, gebildet aus Trägerplatte, den Seitenteilen 20, 21 und der Deckplatte 2 gewährleistet. Der Grundkörper, bestehend aus Trägerplatte und Querteil, besteht vorzugsweise aus Metall, wobei der Grundkörper einschließlich der Kühlrippen 14 einstückig aus einem Block gefräst sein kann.

Figur 5 dient zur Erläuterung des erfindungsgemäßen Verfahrens, welches mit der oben beschriebenen Vorrichtung durchgeführt werden kann.

Zur Durchführung des erfindungsgemäßen Verfahrens wird die Papierbahn 18 mittels der nicht gezeigten Transporteinrichtung einschließlich des dazugehörigen Mo--tors über die Unterseite 15 der Trägerplatte 1 und die Oberseite der Thermodruckplatine 16 und über die Druckzeile 33, die aus den einzelnen Resistordruckpunkten 17 besteht, transportiert. Dabei wird die Papierbahn 18 im Bereich der Resistordruckpunkte 17 mittels einer ebenfalls nicht gezeigten Gegendruckvorrichtung angedrückt. Werden nun eine Reihe von Resistordruckpunkte beheizt, so verfärbt sich an diesen Stellen das Papier, welches thermosensitiv ist. Dabei darf der maximale Vorschub der Papierbahn 18 durch den Drucker nur der Länge des einzelnen Resistordruckpunktes 17 entsprechen, weshalb der Antriebsmotor für die Vorschubeinrichtung der Papierbahn 18 in vorteilhafter Weise ein Schrittmotor sein kann.

Das Druckbild wird nun dergestalt erzeugt, daß jeweils druckzeilenweise die Resistordruckpunkte 17 der Druckzeile 33 beheizt werden und das Druckbild von oben nach unten zeilenweise quer zur Papierbahn gedruckt wird. Dabei ist es nicht notwendig, daß alle Resistordruckpunkte, die in einer Zeile drucken sollen, auch gleichzeitig und somit parallel gesteuert werden. Unter entsprechender Steuerung des Schrittschaltmotors - beispielsweise Einschaltung von Pausen - kann eine Druckzeile auch dergestalt gedruckt werden, daß zuerst beispielsweise ein Drittel der den Druck ausführenden Resistordruckpunkte pro Zeile angesteuert wird, danach das zweite Drittel der den Druck ausführenden Resistordruckpunkte und danach das letzte Drittel. Eine derartige Steuerung kann beim Auftreten extremer Wärmebedingungen oder extrem langer gleichbleibender Druckbilder von Vorteil sein. Bei dem gegebenen Beispiel muß dann natürlich der Schrittschaltmotor zur Förderung der Papierbahn zwischen einem Schaltschritt zwei Schritte aussetzen, bis die gesamte Zeile gedruckt ist. Auf diese Weise wird somit fortlaufend von oben nach unten das Druckbild quer gedruckt, beispielsweise ein Code.

In Figur 5 ist als Druckbild 25 ein Strichcode abgebildet. Das Druckbild 25 besteht aus längsverlaufenden Codebalken, die zeilenweise aus einer Vielzahl von n-Zeilen 26 zusammengesetzt sind. Somit besteht jeder in Figur 5 schwarze Längsbalken des Druckbildes 25 aus einer Vielzahl von einzelnen Druckzeichen 34, deren Länge multipliziert mit der Anzahl n der Zeilen die Länge des Druckbildes ergeben.

Nachdem nunmehr die erste oder die ersten Zeilen 26 des Druckbildes 25 gedruckt ist (sind), erscheint dieses begonnene Druckbild 25 aufgrund des Transportes der Papierbahn 18 sichtbar im Längsschlitz 12. Falls es sich um einen Code-Druck handelt, steht ja schon mit Fertigstellung der ersten Druckzeile fest, ob das Druckbild richtig oder falsch wird, da ja die Druckinformation der ersten Zeile nur n-fach wiederholt wird. Wenn somit das begonnene Druckbild 25 den Längsschlitz 12 passiert, so wird der Schlitten 6 mitsamt dem opto-elektronischen Sensor 11 über das begonnene Druckbild hinwegbewegt und dabei die gedruckte Information optisch gelesen. Dazu kann der Sensor 11 ein integrierter Infrarotsender-Empfänger mit Fokussierung sein.

Das vom Druckbild zum Sensor 11 reflektierte Signal kann nun auf mehrfache Weise ausgewertet werden. Zum einen kann die Druckinformation auf sachliche Richtigkeit überprüft werden, ob somit das generierte, begonnene Druckbild tatsächlich mit der eingegebenen Information, herrührend entweder aus einer Handeingabe aus einem Speicher oder einem Rechner, übereinstimmt. Des weiteren kann das Reflektionsvermögen des einzelnen gedruckten Zeichens gemessen werden und somit beispielsweise die Schwärze des einzelnen Druckzeichens. Darüber hinaus kann zusätzlich das Differential der Reflektion ermittelt werden, um den Übergang zwischen einem gedruckten Zeichen 34 und einer unbedruckten Leerstelle 35 zu ermitteln. Beispielsweise können die beiden letztgenannten Messungen, also die Reflektion des Druckbildes und das Differential der Reflektion, auch bei beliebigen Druckbildern gemessen werden, deren sachlicher Inhalt vor Fertigstellung des gesamten Druckbildes nicht festliegt.

Dieser Lesevorgang läuft dabei sehr schnell ab, da die benötigte Zeit zum elektronischen Überprüfen der Daten gegenüber der Bewegungszeit des Schlittens längs des Längsschlitzes 12 vernachlässigbar klein ist. Beispielsweise ist in Figur 5 durch den Bewegungsvektor 36 dargestellt, daß mit Beginn der vierten Druckzeile 26 der Lesevorgang des Sensors 11 abgeschlossen ist. Bei sehr kurzen Code-Längen muß deshalb die Geschwindigkeit des Schlittens 6, mit der dieser quer zum Papier bewegt wird, größer sein, als die Transportgeschwindigkeit der Papierbahn 18 durch den Drucker. Werden hingegen längere Code-Zeichen generiert, so kann die Geschwindigkeit des Sensors auch gleich oder größer sein, als die Geschwindigkeit der Papierbahn.

Erkennt nun die Prüfelektronik einen Fehler entweder gegenüber der ursprünglich eingegebenen Information oder hinsichtlich des Kontrastes oder der Randschärfe, so wird automatisch der Drucker derart angesteuert, daß das Restbild 29 des Druckbildes 27 als unbrauchbar gekennzeichnet, beispielsweise geschwärzt wird, was in Figur 5 in der unteren Bildhälfte gezeigt ist. Auch hier besteht wieder das Druckbild 27 aus einer Anzahl von n-Zeilen 28, wobei die oberen vier Zeilen als beispielsweise Balkencode ausgedruckt sind. Zwischenzeitlich hatte der Sensor 11 das begonnene Druckbild gelesen, was durch den Bewegungsvektor 37 dargestellt ist. Die Prüfelektronik hat angezeigt, daß die gedruckte Information aus irgendeinem Grunde unbrauchbar ist, weshalb das noch auszudruckende Restbild 29 des Druckbildes 27 als unbrauchbar gekennzeichnet wurde. Damit ist für die Bedienungsperson optisch das Signal gesetzt, dieses Druckbild, sei es als Etikett oder sonstwie, nicht zu verwenden, sondern den Druckvorgang nochmals zu wiederholen.

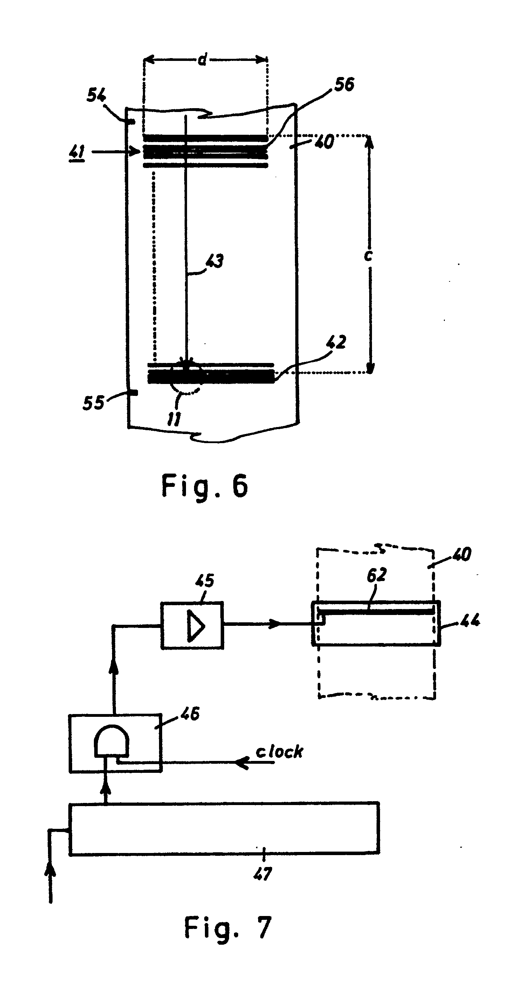

Des weiteren kann die Papierbahn 18 Passermarken 30, 31, 32 und 39 aufweisen, die zur Positionierung des einzelnen Druckbildes dienen. Diese Passermarken werden ebenfalls durch den Sensor 11 erfaßt, der dadurch die Positionierung und den Druckanfang einleitet. Anschließend dient der Sensor, wie beschrieben, zur Überprüfung des Druckbildes. Über diese Passermarken kann beispielsweise der Motor der Vorschubeinrichtung und somit die Vorschubgeschwindigkeit der Papierbahn 18, 40 (Figuren 6 und 7) gesteuert werden. Die Infrarotstrecke des Sensors besitzt also eine Doppelverwendung. Der Sensor liest die Passermarken zur Positionierung, prüft danach das Druckbild und liest gegebenenfalls am anderen Rand die nächste Passermarke, um danach in entgegengesetzter Richtung zum nächsten Prüfvorgang die Papierbahn quer zu überfahren. Diese Vorgänge des Erfassens der Passermarken und der Prüfung des Druckbildes hängen nicht miteinander zusammen, sondern sind mit der erfindungsgemäßen Vorrichtung nacheinander mit ein- und demselben Sensor durchführbar.

Des weiteren ist hervorzuheben, daß die Bewegung des Sensors quer zur Papierbahn nicht gleichförmig sein muß. Die Nichtlinearität der Geschwindigkeit kann mittels der Software-Steuerung über das Produkt Weg x Zeit korrigiert werden. Deshalb braucht auch nicht der einzelne Codestrich geprüft werden, sondern in vorteilhafter Weise genügt es, nur die Summe von beispielsweise schwarz und weiß innerhalb einer bestimmten Zeit zu integrieren. Diese Summe kann einfach mit der Summe aus schwarz und weiß des betreffenden Druckbildes im Speicher oder im Rechner verglichen werden, weshalb das Prüfprogramm softwaremäßig einfach gestaltet sein kann.

Daneben eignet sich das erfindungsgemäße Verfahren gemäß des Anspruchs 1 auch zum Lesen, Überprüfen und Entwerten von Zahlencodes. Denn beim zeilenweisen Drucken von Zahlen gemäß dem hier beschriebenen Verfahren quer zur Papierbahn von oben nach unten, steht die zu druckende Zahl optisch erkennbar dann fest, wenn mindestens die Hälfte der Zahl in ihrer Höhe ausgedruckt ist. In diesem Fall wird die Information optisch während mehr Hin- und Herläufe des Sensors 11 hintereinander gelesen, bis für die Prüfeinrichtung die generierten Zahlen erkennbar sind. Bis zur Fertigstellung des gesamten Druckbildes bleibt dann noch genügend Zeit, den Rest des Druckbildes als nicht brauchbar zu kennzeichnen. Es genügt zur Kennzeichnung der Nichtbrauchbarkeit, daß der Drucker kurz vor Ende des Druckbildes über wenige Zeilen hinweg die Nichtbrauchbarkeit kennzeichnet, beispielsweise schwärzt. Ein als nichtbrauchbar gekennzeichnetes Druckbild ist dann auch als solches zu erkennen, wenn diese Kennzeichnung nur aus einem mehr oder weniger breiten schwarzen Strich quer über die Papierbreite besteht.

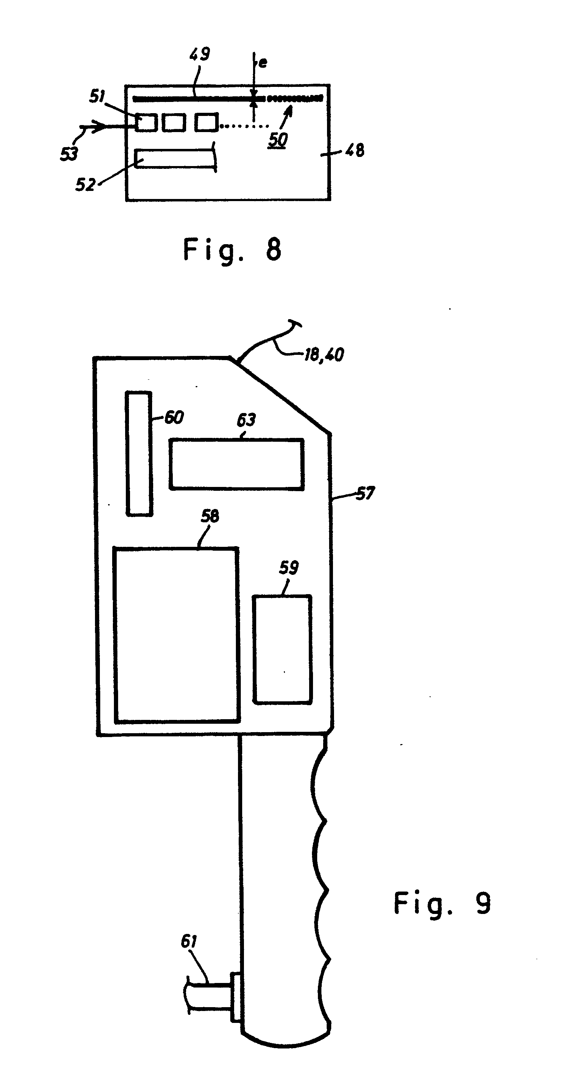

Die Figur 6 zeigt auf einer längs ausgedehnten Papierbahn 40 ein Druckbild 41, welches längs zur Papierbahn gedruckt ist mit höchstens der Druckbildbreite d entsprechend der Länge der Druckzeile des Druckers. Ist der Drucker eine Thermodruckplatine, so enspricht die Druckbildbreite d der Länge der Resistordruckzeile 49,50 der Thermodruckplatine 48 (Figur 8). Bei diesem Druckverfahren kann das Druckbild von Strichcodes beliebig lang sein und somit eine beliebige Informationsmenge beinhalten. Des weiteren kann dadurch der Aufbau der Thermodruckplatine und der Ansteuerung derselben erheblich vereinfacht werden.

Zur Durchführung des Druck- und Prüfvorganges erfaßt beispielsweise der Sensor 11 eine randseitige Passermarke 54 auf einer Papierbahn 40. Dadurch wird die Positionierung des folgenden Druckbildes und der Druckbeginn desselben eingeleitet. Nunmehr drucken alle Druckpunkte einer Druckzeile, beispielsweise die gesamte Resistorzeile 49,50 der Thermodruckplatine 48, quer zur Papierbahn den ersten Codestrich. Dabei entspricht die kleinste Strichstärke des Codestrichs 56 der Länge des einzelnen Resistordruckpunktes. Vorteilhaft kann gemäß Figur 8 die Druckzeile ein durchgehender Resistorbalken 49 sein, weshalb in diesem Fall die geringste Strichbreite des Codestrichs 56 der Breite e des Resistorbalkens 49 entspricht. Der Antriebsmotor zum Vorschub der Papierbahn 40 muß deshalb jeweils als kleinsten Transportschritt die Breite e und ein Vielfaches davon fortschalten.

Zum Prüfen des Druckbildes 41 fährt der Sensor 11 unmittelbar nach dem Positioniervorgang ein Stück in die Druckzeile hinein und wird dort angehalten. Nunmehr laufen zeilenweise die einzelnen Strichbalken und Leerstellen längs der Pfeilrichtung 43 in Figur 6 und somit längs zur Papierbahn unter dem Sensor hinweg, der die Druckzeichen dabei liest. Nachdem der letzte Codebalken des Druckbildes den Sensor passiert hat, wird das Druckbild auf Richtigkeit überprüft und zwar in der Weise, wie zu den vorhergehenden Figuren beschrieben. Bei Erkennung eines Fehlers wird sofort eine optisch sichtbare Entwertung des Druckbildes nachgedruckt. Diese Entwertung kann beispielsweise in einem dicken Querbalken 42 bestehen, der dicker ist, als der dickste auftretende Codestrich. Danach kann der Sensor 11 wieder nach außen verfahren werden, um beispielsweise eine darauffolgende Passermarke 55 auf der Papierbahn 40 zu erfassen.

Eine Thermodruckplatine zum Längsdrucken des Druckbildes und eine Ansteuerschaltung sind in den Figuren 7 und 8 dargestellt. Die Thermodruckplatine 48 weist beispielsweise einen Resistorbalken 49 auf, der durchgehend ist. Dadurch ist der Aufbau einer derartigen Platine sehr einfach. Daneben können zusätzlich einzelne Resistordruckpunkte 50 angeordnet sein, die neben dem Resistorbalken 49 oder unterhalb des Resistorbalkens angeordnet sind.

Zur Ansteuerung einer derartigen Thermodruckplatine 44, 48 dient ein Schieberegister 47, in welchem das Druckbild, aufgelöst nach den einzelnen Codebalken, der Reihe nach eingegeben wird. Der Ausgang des Schieberegisters ist an den einen Eingang eines UND-Gliedes 46 gelegt. Am anderen Eingang liegt ein Clock-Signal an, beispielsweise von 100 kHz oder mehr. Das Ausgangssignal wird beispielsweise in einem Verstärker 45 verstärkt und steuert die Resistordruckzeile 62 an, die aus einem Resistorbalken 49 oder eben aus einzelnen Resistordruckpunkten 50, die alle gleichzeitig bestromt werden, bestehen kann. In Figur 8 sind zusätzlich die elektronischen Bausteine, wie Schieberegister 52 und Verstärker oder IC's 51 auf der Thermodruckplatine 48 in Vielschicht-Dickfilmtechnik integriert.

Beim fortlaufenden Längsdrucken des Druckbildes ist deshalb die Ansteuerung des Druckers vereinfacht, weil jeweils immer die Gesamtheit der Druckerzeile druckt, die nur noch ein- und ausgeschaltet wird. Bei Verwendung einer Thermodruckplatine kann deshalb die Temperatur derselben erfaßt werden, wobei mit steigender Temperatur entweder die Vorschubgeschwindigkeit der Papierbahn erhöht wird, oder die Bestromungszeit verringert wird, beispielsweise mittels einer Pulsbreiten-Modulation. Die Bestromungszeit für die Resistordruckzeile kann somit in einfacher Weise über das Clock-Signal in Abhängigkeit von der Temperatur der Resistordruckzeile geregelt werden. Oder es wird mit zunehmendem Vielfachen der Bestromung bei gleichbleibender Bestromungszeit der Papiervorschub entsprechend geregelt.

Figur 9 zeigt die Vorrichtung gemäß vorliegender Erfindung als Handgerät 57. Dieses Handgerät besitzt ein alpha-numerisches Tastenfeld 58 zur beliebig variablen Eingabe von Informationen. Daneben besitzt das Handgerät 57 eine Festprogrammiereinrichtung 60, über die beispielsweise Festprogramme, wie verschiedene Währungen, eingegeben werden können. Zusätzlich besitzt das
Handgerät einen von außen auswechselbaren Programmträger, der beispielsweise die kundenspezifischen Programmdaten und Programme enthält.
Des weiteren besitzt das Handgerät eine Anzeige
63.

Das erfindungsgemäße Verfahren und die erfindungsgemäße Vorrichtung kann überall dort eingesetzt werden, wo Etikettierungen Verwendung finden, beispielsweise in Warenhäusern zur Preisauszeichnung mittels Etikettenbändern. Oder die Erfindung kann in der pharmazeutischen Industrie zur
Verteilung und Lagerhaltung von Medikamenten
eingesetzt werden.

In weiterer vorteilhafter Ausgestaltung kann die
Erfindung dergestalt eingesetzt werden, daß ein
Teil des Etiketts mit einem Code bedruckt wird, der
dann - wie beschrieben - gelesen und unter Umständen unbrauchbar gemacht werden kann und
ein weiterer Teil des Etiketts mit dem Preis in
Ziffern versehen wird. In diesem Falle sieht der
Verbraucher sofort den Preis der Ware, weshalb
eine derartige Auszeichnung auch mit der Preisauszeichnungsverordnung konform geht. Darüber
hinaus aber genießt der Anwender die Vorteile der
Codierung des Preises, beispielsweise im EAN-
Code. Die Kassiererin an der Kasse kann nun mit
einem Lesegerät den Code lesen, so wie es heute
üblich ist. In diesem Falle kann natürlich die Prüfeinrichtung auch den Codedruck und den Klarschriftdruck untereinander auf Richtigkeit und Übereinstimmung vergleichen.

In vorteilhafter Weise kann das erfindungsgemäße Verfahren und die zugehörige Vorrichtung
auch zur Selbstprüfung des Druckers verwendet
werden. Dazu wird eine Zeile als sogenannte Prüfzeile ausgedruckt, die in diesem Fall das gesamte
Druckbild darstellt. Ist nun ein Druckzeichen, z.B.
ein Resistordruckpunkt, ausgefallen oder verschmutzt, so wird dieser Zustand sofort auf dem
Abdruck sichtbar, da entweder eine Lücke auftaucht oder das Druckbild mangelhaft ist. Beim
Lesen dieses Druckbildes quer zur Papierbahn
durch den Sensor 11 wird nunmehr dieser Fehler
diskriminiert, wonach eine Entwertungskennzeichnung auf dem Papier oder durch sonstige Signalgebung erfolgen kann.

Liste der Bezugszeichen:

| 1 | Trägerplatte |
| 2 | plattenförmiges Querteil |
| 3, 4 | Seitenteile des Querteils 2 |
| 5 | Führungsstange |
| 6 | Schlitten |
| 7 | Hebelarm |
| 8 | gebogenes Teil des Hebelarms 7 |

| 9 | Drehachse |
| 10 | bewegliche Befestigung |
| 11 | opto-elektronischer Sensor |
| 12 | Längsschlitz |
| 13 | Vertiefung |
| 14 | Kühlrippen |
| 15 | Unterseite der Trägerplatte 1 |
| 16 | Thermodruckplatine |
| 17 | Resistordruckpunkte der Thermodruckplatine |
| 18 | Papierbahn |
| 19 | Führungsstange |
| 20, 21 | Seitenteile der Trägerplatte 1 |
| 22 | Deckplatte |
| 23 | Motor |
| 24 | Führungsarm |
| 25, 27 | Strichcodes |
| 26, 28 | Druckzeilen |
| 29 | geschwärzter Rest des Strichcodes 27 |
| 30, 31, 32 | Passermarken auf der Papierbahn 18 |
| 33 | Druckzeile des Druckers 16 |
| 34 | einzelnes Zeichen |
| 35 | einzelne Leerstelle |
| 36, 37 | Bewegungsvektoren des Sensors 11 relativ zur Papierbahn |
| 38 | Lagerbuchse |
| 39 | Passermarke |
| 40 | Papierbahn |
| 41 | Strichcode |
| 42 | Entwertungsbalken |
| 43 | Leserichtung des Sensors |
| 44, 48 | Thermodruckplatine |
| 45 | Verstärker |
| 46, 51 | IC's oder UND-Glieder |
| 47, 52 | Schieberegister |
| 49, 62 | Resistordruckbalken |
| 50 | einzelne Resistordruckpunkte |
| 53 | Clock-Signalleitung |
| 54, 55 | Passermarken |
| 56 | dünnster Strichbalken der Breite eines einzelnen Resistors |
| 57 | Handgerät |
| 58 | alpha-numerisches Tastenfeld |
| 59 | von außen auswechselbarer Programmträger |
| 60 | Festprogrammiereinrichtung |
| 61 | Strom- und externe Signalzuführung |
| 63 | Anzeige |

## Patentansprüche

1. Verfahren zum Drucken eines Druckbildes aus
   Strichcodes oder aus Zahlen mittels eines
   elektrisch angesteuerten Thermodruckers mit
   einem opto-elektronischen Sensor (11) und einer Thermodruckplatine (16), wobei die zu druckenden Daten entweder von Hand mittels einer Tastatur (58) über einen Speicher oder elektrisch aus einem Rechner dem Thermodrucker zugeführt werden, die zu bedruckende Papierbahn (18) mittels eines Motors durch den Thermodrucker transportiert wird und die Druckzeichen (34) je Druckzeile (26,28) des aus einer Mehrzahl von Druckzeilen bestehenden Druckbildes (25,27) zeilenweise generiert werden, dadurch gekennzeichnet, daß das begonnene Druckbild sofort mit Beginn des Druckvorganges nach Ausdrucken der ersten Druckzeile auf der Papierbahn (18) mittels des Sensors (11) abgetastet und gelesen und mit der im Speicher oder Rechner gespeicherten ursprünglichen Information verglichen wird, wobei der Sensor quer zur Papierbahn verfahren wird und bei Erkennen eines Fehlers der Thermodrucker eine visuell erkennbare Entwertung in den noch nicht gedruckten Rest (29) des Druckbildes (27) druckt, beispielsweise den noch nicht gedruckten Rest des Druckbildes schwärzt.

2. Verfahren zum Drucken eines Druckbildes aus Strichcodes (41) mittels eines elektrisch angesteuerten Thermodruckers mit einer Thermodruckplatine, wobei die Druckzeichen je Druckzeile des aus einer Mehrzahl von Druckzeilen bestehenden Strichcodes zeilenweise generiert werden und die einzelnen Codebalken des Strichcodes quer auf eine längs transportierte Papierbahn (40) gedruckt werden und der Strichcode eine beliebige Länge aufweist, dadurch gekennzeichnet, daß ein quer zur Papierbahn (40) verfahrbarer opto-elektronischer Sensor (11) sofort mit Beginn des Druckvorganges aus einer randseitigen Stellung heraus ein Stück in die Druckzeile hineingefahren und dort angehalten wird und im Stillstand die Zeilen (56) des Strichcodes nach Ausdrucken der ersten Druckzeile auf der fortlaufend transportierten Papierbahn (40) längs liest, wobei die zu druckenden Daten entweder von Hand mittels einer Tastatur über einen Speicher oder elektrisch aus einem Rechner dem Thermodrucker zugeführt werden und, nachdem der letzte Codebalken des Strichcodes den Sensor passiert hat, der Strichcode mit der in dem Speicher oder Rechner gespeicherten ursprünglichen Information verglichen wird und bei Erkennen eines Fehlers der Thermodrucker eine visuell erkennbare Entwertung nach dem soeben fertig ausgedruckten Strichcode, beispielsweise einen dicken Querbalken, druckt.

3. Verfahren nach Anspruch 1 oder 2, dadurch gekennzeichnet, daß die Reflektion des einzelnen gedruckten Zeichens (34) gemessen und/oder zur Ermittlung des Überganges zwischen gedruckten Zeichen (34) und unbedruckter Leerstelle (35) oder zwischen einer Druckzeile (56) und der benachbarten Leerzeile das Differential der Reflektion generiert und bei Abfall der Reflektion bzw. des Differentials unter einen vorgegebenen Wert dieser Abfall als Fehler erkannt wird.

4. Verfahren nach Anspruch 1, dadurch gekennzeichnet, daß der Sensor (11) aus einer randseitigen Ruhestellung heraus relativ zur Papierbahn (18) verfahren wird und der Sensor das begonnene Druckbild mäanderförmig mehrfach hin- und hergehend über mehrere Druckzeilen hinweg abtastet.

5. Verfahren nach einem der vorherigen Ansprüche, wobei auf der Papierbahn Passermarken für die Positionierung der Druckbilder vorhanden sind, dadurch gekennzeichnet, daß der Sensor (11) randseitig zur Positionierung des Druckbildes (25,27,41) die Passermarken (30,32,39,54,55) erfaßt und damit den Druckbeginn steuert, anschließend die Druckzeile oder das Druckbild liest und danach wiederum eine Passermarke erfaßt.

6. Thermodrucker zur Durchführung des Verfahrens nach Anspruch 1, der eine elektrisch ansteuerbare Thermodruckplatine (16) mit einer Resistordruckzeile (33) zum Drucken eines Druckbildes aus Strichcodes oder Zahlen aufweist, mit einem Motor zum Transport einer Papierbahn (18) durch den Drucker, dem die zu druckenden Daten von Hand mittels einer Tastatur über einen Speicher oder elektrisch aus einem Rechner zuführbar sind und mit einem optoelektronischen Sensor (11), wobei der Sensor (11) zum Lesen der gedruckten Information in unmittelbarer Nachbarschaft der Resistordruckzeile (33) der Thermodruckplatine (16) angeordnet und mittels eines Motors (23) längs derselben relativ quer zur Papierbahn (18) über dieselbe verfahrbar ist und der Thermodrucker weiter eine Prüfelektronik aufweist zum Vergleichen der gelesenen mit der ursprünglich gespeicherten Information, wobei bei Erkennen eines Fehlers der Thermodrucker eine visuell erkennbare Entwertung in den noch nicht gedruckten Rest (29) des Druckbildes (27) druckt, beispielsweise den noch nicht gedruckten Rest des Druckbildes schwärzt.

7. Thermodrucker zur Durchführung des Verfahrens nach Anspruch 2, der eine elektrisch ansteuerbare Thermodruckplatine mit einer Resistor-druckzeile zum Drukken eines Druckbildes aus Strichcodes aufweist, mit einem Motor zum Transport einer Papierbahn (40) durch den Drucker, dem die zu druckenden Daten von Hand mittels einer Tastatur über einen Speicher oder elektrisch aus einem Rechner zuführbar sind und mit einem opto-elektronischen Sensor (11), wobei der Sensor (11) zum Lesen der gedruckten Information in unmittelbarer Nachbarschaft der Resistordruckzeile der Thermodruckplatine angeordnet und längs derselben relativ quer zur Papierbahn (40) über dieselbe verfahrbar und innerhalb der Druckzeile anhaltbar ist, und der Thermodrucker weiter eine Prüfelektronik aufweist zum Vergleichen der gelesenen mit der ursprünglich gespeicherten Information, wobei, nachdem der letzte Codebalken des Strichcodes den Sensor passiert hat, der gelesene Strichcode mit der in dem Speicher oder Rechner gespeicherten ursprünglichen Information verglichen wird und bei Erkennen eines Fehlers der Thermodrucker eine visuell erkennbare Entwertung nach dem soeben fertig ausgedruckten Strichcode, beispielsweise einen dicken Querbalken, druckt.

8. Vorrichtung nach Anspruch 6 oder 7, dadurch gekennzeichnet, daß
   a) die Thermodruckplatine (16,44,48) flach auf der Unterseite (15) einer Trägerplatte (1) mit von derselben abgewandte Resistordruckzeile (33,49,50,62) montiert ist
   b) die Trägerplatte in unmittelbarer Nachbarschaft der Resistordruckzeile der Thermodruckplatine eine parallel zur Druckzeile verlaufende Aussparung (12) der Länge der Druckzeile aufweist, über die die Papierbahn (18,40) hinwegläuft
   c) der Sensor (11) oberhalb der Aussparung auf der Oberseite der Trägerplatte angeordnet und längs der Aussparung quer zur Papierbahn beweglich ist.

9. Vorrichtung nach Anspruch 8, dadurch gekennzeichnet, daß der Sensor (11) an einem Schlitten (6) befestigt ist, der auf einer parallel zum Längsschlitz (12) oder der Aussparung montierten Führungsstange (5) läuft und der über einen schwenkbaren Hebelarm (7) auf der Führungsstange hin- und herbeweglich ist und daß die Trägerplatte (1) auf ihrer der Thermodruckplatine (16,44,48) abgewandten Oberseite Kühlrippen (14) aufweist, wobei der optoelektronische Sensor (11) ein integrierter Infrarotsender-Empfänger mit einer Fokussiereinrichtung ist.

10. Vorrichtung nach Anspruch 8 oder 9, dadurch gekennzeichnet, daß die Trägerplatte oder die Thermodruckplatine einen Temperatursensor zur Temperaturerfassung der Thermodruckplatine aufweist, wobei der Temperatursensor über eine Steuer- bzw. Regelschaltung mit dem Motor für den Papiertransport zur Steuerung bzw. Regelung der Papiergeschwindigkeit in Abhängigkeit der Temperatur der Thermodruckplatine verbunden ist.

11. Vorrichtung nach Anspruch 7, dadurch gekennzeichnet, daß das Druckbild (41) druckzeilenweise in ein Schieberegister (47,52) eingegeben wird und daß der eine Eingang eines UND-Gliedes (46) mit dem Ausgang des Schieberegisters, der andere Eingang mit einem Taktsignalgeber (53) und der Ausgang mit der Resistordruckzeile (49,50,62) verbunden ist.

12. Vorrichtung nach einem der vorherigen Ansprüche 6 bis 11, dadurch gekennzeichnet, daß die Vorrichtung ein integriertes Handgerät (57) ist, welches einen von außen wechselbaren Programm- und/oder Datenträger (59), eine Festprogrammiereinrichtung (60), ein alpha-numerisches Tastenfeld (58) zur variablen Dateneingabe und eine Datenanzeige (63) aufweist.

**Claims**

1. Process to print a printing image consisting of bar codes or of numbers by means of an electrically controlled thermal printer having an optoelectronic sensor (11) and a thermal printing platen (16), whereby the information to be printed is either entered into the thermal printer manually by means of a keyboard (58) via a memory or else electronically from a computer; the sheet of paper (18) to be printed on is transported through the thermal printer by means of a motor and the printing characters (34) of each print line (26,28) of the printing image (25,27) consisting of a number of print lines are generated one line at a time, characterized in that, when the printing process begins, the printing image which has been started is immediately picked up and read by the sensor (11) after the first print line has been printed on the sheet of paper (18) and the printing image is compared with the original information stored in the memory or in the computer, whereby the sensor moves at a right angle to the sheet of paper and, if an error is detected, the thermal printer prints a visually recognizable cancellation on the rest (29) of the printing image (27) where it has not yet been printed, for example, the printer blackens the rest of the printing image where it has not yet been printed.

2. Process to print a printing image consisting of bar codes (41) by means of an electrically controlled thermal printer having a thermal printing platen, whereby the printing characters of each print line of the bar code consisting of a number of print lines are generated one line at a time, and the individual code bars of the bar code are printed at a right angle to a sheet of paper (40) which is transported lengthwise, and the bar code is of any desired length, characterized in that, immediately when the printing process begins, an optoelectronic sensor (11) which can be moved at a right angle to the sheet of paper (40) is moved from its position at the edge somewhat onto the print line and is stopped there and, while standing still, it reads the lines (56) of the bar code in the lengthwise direction after the first print line has been printed on the continuously transported sheet of paper (40), whereby the information to be printed is either entered into the thermal printer manually by means of a keyboard via a memory or else electronically from a computer and, after the last code bar of the bar code has passed the sensor, the bar code is compared with the original information stored in the memory or in the computer and, if an error is detected, the thermal printer prints a visually recognizable cancellation after the just-printed bar code, for example a thick line crosswise.

3. Process according to Claim 1 or 2, characterized in that
the reflection of the individual printed character (34) is measured and/or, in order to ascertain the transition between printed characters (34) and unprinted blank space (35) or between a print line (56) and the adjacent blank line, the differential of the reflection is generated and, in case of a drop in the reflection or of the differential below a certain pre-defined value, this drop is recognized as an error.

4. Process according to Claim 1, characterized in that the sensor (11) is moved from its resting position at the edge relative to the sheet of paper (18) and the sensor picks up the printing image, which has been started, in a meander-like motion, moving back and forth above several print lines.

5. Process according to one of the preceding claims, whereby there are register marks on the sheet of paper for the positioning of the printing images, characterized in that
the sensor (11) picks up the register marks (30,32,39,54, 55) on the edge with respect to the position of the printing image (25,27,41) and thus controls the start of the printing, the sensor subsequently reads the print line or the printing image and then once again picks up a register mark.

6. Thermal printer to carry out the process according to Claim 1, which has an electrically controlled printing platen (16) with a resistor print line (33) to print a printing image consisting of bar codes or numbers, having a motor to transport a sheet of paper (18) through the printer, into which the information to be printed is either entered manually by means of a keyboard (58) via a memory or else electronically from a computer, and which has an optoelectronic sensor (11), whereby the sensor (11) is positioned in the immediate vicinity of the resistor print line (33) of the thermal printing platen (16) for purposes of reading the printed information and the sensor can be moved along said printing platen by means of a motor (23) at a right angle relative to the sheet of paper (18) above said sheet of paper, and furthermore, the thermal printer has an electronic testing device for purposes of comparing the information read with the originally stored information whereby, if an error is detected, the thermal printer prints a visually recognizable cancellation on the rest (29) of the printing image (27) where it has not yet been printed, for example, the printer blackens the rest of the printing image where it has not yet been printed.

7. Thermal printer to carry out the process according to Claim 2, which has an electrically controlled printing platen (16) with a resistor print line to print a printing image consisting of bar codes, with a motor to transport a sheet of paper (40) through the printer, into which the information to be printed can either be entered manually by means of a keyboard via a memory or else electronically from a computer, and which has an optoelectronic sensor (11), whereby the sensor (11) is located in the immediate vicinity of the resistor print line of the thermal printing platen for purposes of reading the printed information and the sensor can be moved along said printing platen at a right angle relative to the sheet of paper (40) and can be stopped within the print line, and furthermore, the thermal printer has an electronic testing device for purposes of comparing the information read with the originally stored information whereby, after the last code bar of the bar code has passed the sensor, the bar code read is compared with the original information stored in the memory or in the computer and, if an error is detected, the thermal printer prints a visually recognizable cancellation after the just-printed bar code, for example, a thick line crosswise.

8. Device according to Claim 6 or 7, characterized in that
a) the thermal printing platen (16,44,48) is mounted flat on the bottom (15) of a baseplate (1) with the resistor print line (33,49,50,62) facing away from said baseplate,
b) in the immediate vicinity of the resistor print line of the thermal printing platen, the baseplate has a groove (12) which is the length of the print line and runs parallel to the print line, above which groove the sheet of paper (18,40) passes,
c) the sensor (11) is located above the groove on the upper side of the baseplate and can be moved along the groove at a right angle to the sheet of paper.

9. Device according to Claim 8, characterized in that the sensor (11) is attached to a carriage (6) which runs on a guide bar (5) mounted parallel to the longitudinal slit (12) or to the groove and which can be moved back and forth via a pivoting lever arm (7) on the guide bar, and in that the baseplate (1) has cooling ribs (14) on its upper side facing away from the thermal printing platen (16,44,48), whereby the optoelectronic sensor (11) is an integrated infrared transmitter-receiver with a focussing device.

10. Device according to Claim 8 or 9, characterized in that
the baseplate or the thermal printing platen has a temperature sensor to detect the temperature of the thermal printing platen, whereby the temperature sensor is connected via a control and regulation circuit with the motor, for the paper transport for controlling and regulating the paper speed as a function of the temperature of the thermal printing platen.

11. Device according to Claim 7, characterized in that the printing image (14) is entered one print line at a time into a sliding register (47,52) and in that one of the inputs of an AND element (46) is connected with the output of the sliding register, while the other input is connected with a clock pulse transmitter (53), and the output is connected with the resistor print line (49,50,62).

12. Device according to one of the preceding Claims 6 through 11, characterized in that
the device is an integrated manual device (57), which has an externally changeable program and/or data carrier (59), a fixed program device (60), an alpha-numeric keyboard (58) for variable data input and a data display (63).

**Revendications**

1. Procédé pour imprimer une image d'impression en codes à bâtonnets ou en chiffres à l'aide d'une imprimante thermique à commande électrique, avec un détecteur opto-électronique (11) et une plaque d'impression thermique (16), les données à imprimer étant amenées à l'imprimante thermique soit manuellement au moyen d'un clavier (58) par l'intermédiaire d'une mémoire, soit électriquement à partir d'un ordinateur, la bande de papier à imprimer (18) étant transportée dans l'imprimante thermique par un moteur et les caractères d'impression (34) pour chaque ligne (26,28) de l'image d'impression (25,27) qui comprend une multiplicité de lignes d'impression étant générés ligne par ligne, caractérisé en ce que
l'image d'impression commencée est balayée et lue par le détecteur dès le début de l'opération d'impression après que la première ligne soit imprimée sur la bande de papier (18), et comparée avec l'information originale stockée dans la mémoire ou dans l'ordinateur, le détecteur se déplaçant transversalement par rapport à la bande de papier et que, lorsqu'une erreur est détectée, l'imprimante thermique imprime une oblitération visible sur le reste (29) de l'image d'impression pas encore imprimée, par exemple en noircissant le reste de l'image d'impression pas encore imprimée.

2. Procédé pour imprimer une image d'impression en codes à bâtonnets (41) au moyen d'une imprimante thermique à commande électrique et comprenant une plaque d'impression thermique, dans lequel les caractères d'impression de chaque ligne du code à bâtonnets consistant en une multiplicité de lignes d'impression sont générés ligne par ligne, les bâtonnets individuels des codes à bâtonnets sont imprimés transversalement sur une bande de papier (41) transportée longitudinalement et le code à bâtonnets présente une longueur quelconque,

caractérisé en ce que, dès le début de l'opération d'impression, un détecteur opto-électronique (11) déplaçable transversalement par rapport à la bande de papier (40), est déplacé légèrement du bord du papier vers l'intérieur de la ligne d'impression pour y être arrêté et que ledit détecteur, en position d'arrêt sur la bande de papier transportée en continu, lit longitudinalement les lignes (56) du code à bâtonnets à l'issue de l'impression de la première ligne d'impression, les données à imprimer étant amenées à l'imprimante thermique soit manuellement à l'aide d'un clavier par l'intermédiaire d'une mémoire, soit électriquement à partir d'un ordinateur, que, dès que le dernier bâtonnet du code à bâtonnets a passé le détecteur, le code à bâtonnets est comparé avec l'information originale stockée dans la mémoire ou dans l'ordinateur et que l'imprimante thermique, lorsqu'une erreur est détectée, imprime une oblitération visible, par exemple une large barre transversale, à la fin du code à bâtonnets venant d'être imprimé.

3. Procédé suivant l'une quelconque des revendications 1 et 2, caractérisé en ce que

la réflexion du caractère individuel imprimé (34) est mesurée et/ou, pour déterminer la transition entre le caractère imprimé (34) et le vide non imprimé (35) ou bien entre une ligne imprimée (56) et la ligne vierge adjacente, le différentiel de la réflexion est généré et que, lorsque la réflexion ou le différentiel chutent en-dessous d'une valeur préfixée, cette chute est reconnue comme erreur.

4. Procédé suivant la revendication 1, caractérisé en ce que

le détecteur (11) est déplacé relativement par rapport à la bande de papier à partir de sa position de repos au bord de celle-ci et que le détecteur balaye l'image d'impression commencée en décrivant des méandres et en passant plusieurs fois sur plusieurs lignes d'impression dans un mouvement de va-et-vient.

5. Procédé suivant l'une quelconque des revendications précitées, dans lequel la bande de papier est pourvue de repères pour le positionnement des images d'impression, caractérisé en ce que

le détecteur (11), sur le bord, saisit les repères (30, 32,39,54,55) pour le positionnement de l'image d'impression (25,27,41) en commandant ainsi le début de l'impression et qu'il lit la ligne ou l'image d'impression pour saisir ensuite un nouveau repère.

6. Imprimante thermique pour la mise en oeuvre du procédé suivant la revendication 1, présentant une plaque d'impression thermique (16) à commande électrique, avec une ligne d'impression à résistor (33) pour l'impression d'une image d'impression en codes à bâtonnets ou en chiffres, avec un moteur pour le transport d'une bande de papier (18) dans l'imprimante, à laquelle les données à imprimer peuvent être amenées soit manuellement à l'aide d'un clavier par l'intermédiaire d'une mémoire, soit électriquement à partir d'un ordinateur, et avec un détecteur opto-électrique (11), ledit détecteur (11) pour la lecture de l'information imprimée étant disposé à proximité immédiate de la ligne d'impression à résistor (33) de la plaque d'impression thermique (16) et pouvant être déplacé au moyen d'un moteur (23) le long de celle-ci relativement transversalement par rapport à la bande de papier (18) sur celle-ci et que l'imprimante thermique présente en outre une électronique de contrôle pour la comparaison de l'information lue avec celle originalement stockée et, lorsqu'une erreur est détectée, l'imprimante thermique imprime une oblitération visible sur le reste (29) pas encore imprimé de l'image d'impression (27), par exemple en noircissant le reste pas encore imprimé de l'image d'impression.

7. Imprimante thermique pour la mise en oeuvre du procédé suivant la revendication 2, présentant une plaque d'impression thermique à commande électrique, avec une ligne d'impression à résistor pour l'impression d'une image d'impression en codes à bâtonnets, avec un moteur pour le transport d'une bande de papier (40) dans l'imprimante, à laquelle les données à imprimer peuvent être amenées soit manuellement à l'aide d'un clavier par l'intermédiaire d'une mémoire, soit électriquement à partir d'un ordinateur, et avec un détecteur opto-électrique (11), ledit détecteur (11) pour la lecture de l'information imprimée étant disposé à proximité immédiate de la ligne d'impression à résistor de la plaque d'impression thermique et pouvant être déplacé le long de celle-ci relativement transversalement par rapport à la bande de papier (40) sur cette dernière et arrêté sur la ligne d'impression, et que l'imprimante thermique présente en outre une électronique de contrôle pour la comparaison de l'information lue avec celle originalement stockée et, le dernier bâtonnet du code à bâtonnets ayant passé le détecteur, le code à bâtonnets lu est comparé avec l'information originale stockée dans la mémoire ou dans l'ordinateur et, lorsqu'une erreur est détectée, l'imprimante thermique imprime une oblitération visible, par exemple une large barre transversale, à la fin du code à bâtonnets venant d'être imprimé.

8. Dispositif suivant l'une quelconque des revendications 6 et 7, caractérisé en ce que

    a) la plaque d'impression thermique (16,44,48) est montée de façon plane sur la surface inférieure (15) d'une plaque de support (1), la ligne d'impression à résistor (33,49,50,62) étant disposée sur la face opposée

    b) la plaque de support présente, à proximité immédiate de la ligne d'impression à résistor de la plaque d'impression thermique, un évidement (12) s'étendant parallèlement à la ligne d'impression et ayant la même longueur que celle-ci, sur lequel passe la bande de papier (18,40)

    c) le détecteur (11) est disposé sur la surface supérieure de la plaque de support, au-dessus de l'évidement, et peut être déplacé le long de l'évidement transversalement par rapport à la bande de papier.

9. Dispositif suivant la revendication 8, caractérisé en ce que le détecteur (11) est fixé sur un coulisseau (6) qui court sur une barre de guidage (5) montée parallèlement à la fente longitudinale (12) ou à l'évidement et qui peut être déplacé sur la barre de guidage dans un mouvement de va-et-vient par un bras à levier (7) pivotant et que la plaque de support (1) présente des ailettes de refroidissement (14) sur sa surface supérieure opposée à la plaque d'impression thermique (16,44,48), le détecteur opto-électrique (11) étant un émetteur-récepteur infrarouge avec un dispositif de focalisation.

10. Dispositif suivant l'une quelconque des revendications 8 et 9, caractérisé en ce que la plaque de support ou la plaque d'impression thermique présente une sonde de température pour la mesure de la température de la plaque d'impression thermique, ladite sonde de température étant reliée, par l'intermédiaire d'un circuit de commande ou de réglage, avec le moteur pour le transport du papier pour commander ou régler la vitesse du papier en fonction de la température de la plaque d'impression thermique.

11. Dispositif suivant la revendication 7, caractérisé en ce que l'image d'impression (41) est entrée par lignes d'impression dans un registre de décalage (47,52), que l'une des entrées d'un circuit ET (46) est reliée avec la sortie du registre de décalage, et l'autre entrée avec un générateur de cadence (53) et que la sortie est reliée avec la ligne d'impression à résistor (49,50,62).

12. Dispositif suivant l'une quelconque des revendications 6 à 11, caractérisé en ce que ledit dispositif est un appareil manuel intégré (57) présentant un support de programmes et/ou de données (59) échangeable de l'extérieur, un dispositif de programmation fixe (60), un clavier alphanumérique (58) pour l'entrée variable des données et un écran de visualisation (63).

Fig. 1

Fig. 2

Fig. 3

Fig. 4

Fig. 5

Fig. 6

Fig. 7

Fig. 8

Fig. 9